# EUROPÄISCHE PATENTSCHRIFT

(11) **EP 4 224 119 B1**
(45) Veröffentlichungstag und Bekanntmachung des Hinweises auf die Patenterteilung: **26.08.2026**
(21) Anmeldenummer: 23153257.3
(22) Anmeldetag: 25.01.2023
(51) Int. Cl.: G01F 11/28, G01F 13/00, B67C 3/28, G01F 1/00, G01F 23/00

(54) **VERFAHREN ZUR ABFÜLLUNG EINES ZIELVOLUMENS IN EINEN BEHÄLTER, MESSANORDNUNG UND VERWENDUNG EINES DURCHFLUSSMESSGERÄTES**
METHOD FOR FILLING A TARGET VOLUME INTO A CONTAINER, MEASURING ASSEMBLY AND USE OF A FLOW METER
PROCÉDÉ DE REMPLISSAGE D'UN VOLUME CIBLE DANS UN RÉCIPIENT, DISPOSITIF DE MESURE ET UTILISATION D'UN DÉBITMÈTRE

(30) Priorität: 04.02.2022 DE 102022102669
(43) Veröffentlichungstag der Anmeldung: 09.08.2023
(73) Patentinhaber: Krohne Messtechnik GmbH, 47058 Duisburg (DE)
(72) Erfinder: Kuschnerus, Dirk, 47802 Krefeld (DE); Lüke, Christopher, 45892 Gelsenkirchen (DE); Walbrecker, Sven, 27639 Wurster Nordseeküste (DE)
(74) Vertreter: Gesthuysen Patentanwälte

(56) Entgegenhaltungen:
- CA-C- 2 769 211
- DE-A1- 102005 035 264
- DE-B3- 102020 112 129
- DE-B4- 102004 022 519

## Beschreibung

Die Erfindung geht aus von einem Verfahren zur Abfüllung eines Zielvolumens in einen Behälter, mittels einer Messanordnung, wobei die Messanordnung wenigstens ein Durchflussmessgerät zur Messung des Durchflusses eines in den Behälter fließenden Mediums, wenigstens einen Aktor und wenigstens eine Steuereinheit aufweist,
wobei das Durchflussmessgerät eine Recheneinheit aufweist,
wobei durch Betätigung des Aktors der Abfüllvorgang begonnen und beendet werden kann,
wobei die Steuereinheit mit dem Aktor und dem Durchflussmessgerät über ein Kommunikationssystem verbunden ist, und wobei die Steuereinheit derart eingerichtet ist, dass sie im Betrieb einen Steuerbefehl an den Aktor zur Beendigung des Abfüllvorgangs sendet, wenn ein festgelegter Grenzwert des Füllvolumens, der mit dem Zielvolumen korreliert, erreicht ist.

Darüber hinaus betrifft die Erfindung eine Messanordnung zum Abfüllen eines Zielvolumens in einen Behälter, mit wenigstens einem Durchflussmessgerät zur Messung des Durchflusses eines in den wenigstens einen Behälter fließenden Mediums, mit wenigstens einem Aktor, mit wenigstens einer Steuereinheit,
wobei das Durchflussmessgerät eine Recheneinheit aufweist,
wobei durch Betätigung des Aktors der Abfüllvorgang begonnen und beendet werden kann,
wobei die Steuereinheit mit dem Aktor und dem Durchflussmessgerät über ein Kommunikationssystem verbunden ist, und wobei die Steuereinheit derart eingerichtet ist, dass sie im Betrieb einen Steuerbefehl an den Aktor zur Beendigung des Abfüllvorgangs sendet, wenn ein festgelegter Grenzwert des Füllvolumens, der mit dem Zielvolumen korreliert, erreicht ist.

Weiterhin betrifft die Erfindung ein Durchflussmessgerät zur Verwendung in einer erfindungsgemäßen Messanordnung.

Die vorliegende Erfindung betrifft den Einsatz von Durchflussmessgeräten in Anwendungen, in denen ein Volumen oder eine Masse dosiert wird. Ein spezielles Anwendungsbeispiel ist die Dosierung eines vorgegebenen Zielvolumens durch Ventile in der Getränkeabfüllung. Durch die praktisch begrenzte Abtastrate eines Messgeräts und die Laufzeit der Datenübertragung zwischen der zentralen Steuereinheit und dem Ventil bzw. dem Messgerät entsteht eine Verzögerung der Abschaltung des Abfüllvorgangs. Diese zeitliche Quantisierung führt zu einer Überfüllung, da zwischen idealem und verzögerten Abschaltzeitpunkt des Ventils zusätzliches Medium austritt. Die Überfüllung ist dann maximal, wenn der zuletzt abgetastete Messwert gerade nicht zum Erreichen des Zielvolumens führt und minimal, wenn der zuletzt abgetastete Messwert dafür knapp ausreicht.

In einer digitalisierten prozesstechnischen Anlage sind die Durchflussmessgeräte und die Aktoren durch digitale, paketbasierte Feldbusse mit einer zentralen Steuereinheit verbunden. Die Steuereinheit entscheidet aufgrund der empfangenen Messwerte der Durchflussmessgeräte, ob und wie ein Regeleingriff durch die Aktoren notwendig ist. Die begrenzte Abtastrate der Messgeräte und die endlichen Laufzeiten der Datenübertragung führen dabei zu einer Abweichung gegenüber idealem Verhalten. In der Regel kann eine Steuereinheit derart ausgebildet werden, dass sie trotz nicht idealem Verhalten den Abfüllprozess mit tolerierbaren Fehlern kontrolliert. Eine Möglichkeit zur Minimierung des zuvor beschriebenen Fehlers ist es, die Abtastrate der Messgeräte und die Laufzeiten der Datenübertragung durch erhöhten Einsatz von Hardware so weit zu reduzieren, bis ein zufriedenstellendes Ergebnis erreicht ist.

Im Falle der Dosierung eines Zielvolumens treten neben diesen deterministischen Fehlern auch nicht-deterministische Fehler auf. Diese basieren darauf, dass der Zeitpunkt, zu dem das gewünschte Zielvolumen erreicht wird, keine feste Korrelation mit dem Sendezyklus der Füllnachrichten der Durchflussmessgeräte aufweist, sondern von kontinuierlichen, schwankenden Prozessgrößen abhängt.

Mit einer ausreichend kleinen Schrittweite bzw. hohen Abtastraten kann auch der nicht-deterministische Fehler theoretisch beliebig reduziert werden. Dieses Vorgehen führt jedoch zu überproportional steigenden Kosten durch höherwertige Hardware und wird ab einem gewissen Punkt durch die technischen Möglichkeiten begrenzt. Daher ist ein solches Vorgehen nicht für alle Anwendungsfälle zielführend bzw. teils auch nicht umsetzbar.

Die Druckschrift DE 103 07 672 A1 betrifft ein Verfahren zum Abfüllen eines Mediums in ein Behältnis, wobei das Abfüllen des Mediums in mehreren Abfüllschritten erfolgt, indem in einem ersten Abfüllschritt das Abfüllen durch Schließen eines Ventils unterbrochen wird, um den während des Schließens des Ventils erfolgenden Nachlauf des Mediums zu bestimmen und wobei der Endwert zur Beendigung Abfüllvorgangs unter Berücksichtigung des Nachlaufs bestimmt wird.

Zudem ist aus der Druckschrift DE 10 2019 125 329 A1 ein Verfahren zum Abfüllen eines Mediums in einen Behälter bekannt, wobei der Behälter schlagartig befüllt wird, sodass keine Überwachung des Füllprozesses im Sinne einer regelmäßigen Erfassung des aktuellen Füllvolumens möglich ist. Zur Verbesserung der Genauigkeit des Abfüllprozesses werden Einflussgrößen, die eine Zielgröße der Befüllung, insbesondere die Füllhöhe, beeinflussen, erfasst und bei der Einstellung der Abfüllparameter berücksichtigt.

Die Druckschrift DE 10 2005 035 264 A1 betrifft ein Verfahren zur Bestimmung von Steuerdaten zur Bestimmung der Steuerung oder Regelung der Abfüllung eines Mediums, wobei in einer Speichereinheit Steuerdaten hinterlegt sind, wobei das Durchflussmessgerät in Abhängigkeit beispielsweise in Abhängigkeit einer Prozessbedingung oder Mediumseigenschaft, insbesondere die optimalen Steuerdaten zur Steuerung des Abfüllprozesses auswählt.

Die Druckschrift CA 2769211 C beschreibt ein Sensorsystem zur Erkennung des Füllstandes einer Abfüllanlage sowie ein Verfahren zum Abfüllen eines Mediums. Dabei wird der Zeitpunkt, zu dem der Behälter voll sein wird, vorausgesagt. In Abhängigkeit der Füllrate kann die Abtastrate des Sensorsystems erhöht werden.

Ausgehend von dem beschriebenen Stand der Technik liegt der Erfindung die Aufgabe zugrunde, ein Verfahren zur Abfüllung eines Zielvolumens anzugeben, sodass die nicht-deterministische Überfüllung reduziert werden kann. Darüber hinaus liegt der Erfindung die Aufgabe zugrunde, eine entsprechende Messanordnung zur Durchführung des erfindungsgemäßen Verfahrens und ein Durchflussmessgerät für die Messanordnung anzugeben.

Gemäß einer ersten Lehre der vorliegenden Erfindung wird die zuvor dargelegte Aufgabe durch ein eingangs beschriebenes Verfahren zur Abfüllung eines Mediums dadurch gelöst, dass das Verfahren die folgenden Schritte aufweist:
- Starten des Abfüllvorgangs,
- Berechnung des aktuellen Füllvolumens durch Integration der gemessenen Durchflussmesswerte durch die Recheneinheit des Durchflussmessgeräts,
- Senden einer Füllnachricht in definierten Zeitabständen mit dem aktuellen Füllvolumen von dem Durchflussmessgerät an die Steuereinheit,
- Prädiktion der verbleibenden Zeit bis der Grenzwert des Füllvolumens erreicht ist durch die Recheneinheit des Durchflussmessgeräts,
- Prüfung durch die Recheneinheit des Durchflussmessgeräts, ob der Grenzwert des Füllvolumens zeitlich vor dem Senden der nächsten Füllnachricht des Durchflussmessgeräts erreicht ist,
- sofern der Grenzwert des Füllvolumens zeitlich vor dem Senden der nächsten Füllnachricht des Durchflussmessgeräts erreicht ist, Senden einer Zusatznachricht mit dem Grenzwert des Füllvolumens zu einem prädizierten Zeitpunkt zeitlich vor der nächsten Füllnachricht an die Steuereinheit und
- Beenden des Abfüllvorgangs durch einen Steuerbefehl der Steuereinheit.

Erfindungsgemäß wurde erkannt, dass die Genauigkeit des abgefüllten Zielvolumens dadurch verbessert werden kann, dass alternativ zur Erhöhung der Abtastrate durch die Recheneinheit des Durchflussmessgeräts eine Voraussage gemacht wird, wann der Grenzwert des Füllvolumens zur Beendigung des Abfüllvorgangs erreicht wird und dass in Abhängigkeit dieser Voraussage eine Zusatznachricht zum passenden Zeitpunkt, insbesondere außerhalb des Senderhythmus des Durchflussmessgeräts, übermittelt wird, damit der Aktor möglichst zeitnah zum Erreichen des Zielvolumens zum Beenden des Abfüllvorgangs betätigt werden kann.

Ist der Aktor gemäß einer Ausgestaltung als Ventil ausgebildet, so wird der Abfüllvorgang beispielsweise durch Öffnen des Ventils gestartet. Das Durchflussmessgerät erkennt, dass der Abfüllvorgang beginnt oder es bekommt dies von der Steuereinheit mitgeteilt.

Gemäß einer Ausgestaltung des Verfahrens werden die Füllnachrichten an die Steuereinheit in einem regelmäßigen, d.h. zeitlich konstanten, Abstand gesendet. Alternativ kann sich der Abstand zum Senden der einzelnen Füllnachrichten im Laufe des Abfüllprozesses auch ändern. Beispielsweise ist es denkbar, dass keine Füllnachricht gesendet wird, bis der Behälter das halbe Füllvolumen aufweist und dass ab diesem Zeitpunkt entweder regelmäßig oder in sich zeitlich verkürzenden Abständen eine Füllnachricht gesendet wird.

Besonders bevorzugt entspricht der Senderhythmus, mit dem das wenigstens eine Durchflussmessgerät Füllnachrichten an die Steuereinheit sendet, der Abtastrate des Durchflussmessgeräts.

Besonders bevorzugt berücksichtigt die Recheneinheit zur Bestimmung des aktuellen Füllvolumens neben dem gemessenen Durchfluss wenigstens eine weitere Prozessgröße, beispielsweise die Viskosität und/oder die Temperatur und/oder den Druck des abzufüllenden Mediums. Gemäß dieser Ausgestaltung ist wenigstens ein weiterer Sensor zur Erfassung der wenigstens einen weiteren Prozessgröße vorhanden. Diese Ausgestaltung weist den Vorteil auf, dass die Bestimmung des aktuellen Füllvolumens besonders genau ist. Insbesondere wird gemäß dieser Ausgestaltung berücksichtigt, dass der Abfüllprozess Schwankungen unterliegt, die auf Schwankungen von Prozessgrößen wie beispielsweise der Viskosität und/oder der Temperatur und/oder dem Druck des Mediums zurückzuführen sind.

Gemäß einer Ausgestaltung wird die Prädiktion der verbleibenden Zeit bis der Grenzwert des Füllvolumens erreicht ist, basierend auf der Annahme, dass der Durchfluss dem zuletzt gemessenen Wert entspricht und konstant bleibt, durchgeführt. Alternativ kann die Prädiktion der verbleibenden Zeit bis der Grenzwert des Füllvolumens erreicht ist, auch unter Berücksichtigung einer Mehrzahl von gemessenen Durchflusswerten, beispielsweise basierend auf einer Mittelung der gemessenen Durchflusswerte, bestimmt werden.

Besonders bevorzugt wird der Abfüllvorgang durch Schließen des als Ventil ausgebildeten Aktors beendet.

Der Grenzwert des Füllvolumens kann gemäß einer Ausgestaltung das Zielvolumen sein. Gemäß einer anderen Ausgestaltung ist der Grenzwert geringer als das Zielvolumen, wobei vorzugsweise die Differenz zum Zielvolumen ein Nachlaufen des Mediums in den Behälter aufgrund der Übertragungsdauer der Datenübertragung und/oder der Reaktionszeit der Steuereinheit und/oder der Reaktionszeit des Aktors berücksichtigt.

Gemäß einer weiteren Ausgestaltung des Verfahrens wird die Zusatznachricht unter Berücksichtigung der Übertragungsdauer der Datenübertragung und/oder der Reaktionszeit der Steuereinheit und/oder der Reaktionszeit des Aktors gesendet.

Erfindungsgemäß wird die Zusatznachricht mit dem Grenzwert des Füllvolumens zeitlich vor dem Erreichen des Grenzwertes des Füllvolumens gesendet, wobei die zeitliche Differenz die Übertragungsdauer der Datenübertragung und/oder der Reaktionszeit der Steuereinheit und/oder der Reaktionszeit des Aktors berücksichtigt.

Besonders bevorzugt sendet das Durchflussmessgerät die Zusatznachricht mit dem Grenzwert des Füllvolumens zu dem prädizierten Zeitpunkt ohne diesen Grenzwert tatsächlich messtechnisch erfasst zu haben. Diese Ausgestaltung ermöglicht, dass das Senden der Zusatznachricht nicht an die Abtastrate des Durchflussmessgeräts gebunden ist.

Gemäß einer nächsten Ausgestaltung des Verfahrens wird die Zusatznachricht spätestens zum Zeitpunkt, zu dem das Zielvolumen erreicht ist, vorzugsweise zeitlich vor dem Erreichen des Zielvolumens gesendet.

Weiterhin ist es bevorzugt, wenn die Zusatznachricht mit erhöhter Priorität gesendet wird. Damit kann gewährleistet werden, dass sofern in der Kommunikationsverbindung zwischen dem Durchflussmessgerät und der Steuereinheit weitere Nachrichten, insbesondere weitere Füllnachrichten, gesendet werden, die relevante Zusatznachricht priorisiert an die Steuereinheit übermittelt wird. Insbesondere in einer Messanordnung, in der eine Mehrzahl von Füllstellen, an denen weitere Durchflussmessgeräte und Aktoren angeordnet sind, die mit der Steuereinheit kommunizieren, vorhanden sind, ist die Abfüllung an den einzelnen Füllstellen damit besonders genau.

Gemäß einer weiteren vorteilhaften Ausgestaltung des Verfahrens wird wenigstens eine Füllnachricht des Durchflussmessgeräts ausgelassen, vorzugsweise damit die Zusatznachricht zum prädizierten Zeitpunkt gesendet werden kann. Wird beispielsweise bestimmt, dass der Grenzwert des Füllvolumens kurz nach dem Senden der folgenden Füllnachricht erreicht wird, so ist es denkbar, dass die folgende Füllnachricht ausgelassen wird, damit kurze Zeit später die Zusatznachricht mit dem relevanten Grenzwert des Füllvolumens gesendet werden kann.

Gemäß einer nächsten vorteilhaften Ausgestaltung des erfindungsgemäßen Verfahrens ist eine Mehrzahl an Durchflussmessgeräten und eine Mehrzahl an Aktoren vorhanden, wobei die Steuereinheit mit der Mehrzahl an Durchflussmessgeräten und der Mehrzahl an Aktoren durch das Kommunikationssystem verbunden ist und wobei, sofern ein Durchflussmessgerät eine Zusatznachricht außerhalb seines Senderhythmus sendet, diese Zusatznachricht priorisiert gesendet wird. Diese Ausgestaltung gewährleistet, dass an jeder Füllstelle eine besonders genaue Abfüllung des Zielvolumens unter Vermeidung bzw. Minimierung einer Überfüllung erfolgt.

Unter einer Priorisierung wird ebenso verstanden, dass, sofern ein Durchflussmessgerät eine Zusatznachricht außerhalb seines Senderhythmus sendet, die übrigen Durchflussmessgeräte keine kollidierenden Füllnachrichten senden, sodass die übrigen Durchflussmessgeräte einzelne Füllnachrichten auslassen oder verzögern um Kollisionen zu vermeiden.

Sind die Mehrzahl an Durchflussmessgeräten und die Mehrzahl an Aktoren über ein gemeinsames Kommunikationssystem mit der Steuereinheit verbunden, ist es nach einer Ausgestaltung ebenfalls vorteilhaft, wenn die Durchflussmessgeräte nur der Steuereinheit nur Zusatznachrichten senden, wenn der jeweilige Grenzwert erreicht ist. Diese Ausgestaltung minimiert die Wahrscheinlichkeit, dass im Kommunikationssystem Kollisionen mit Zusatznachrichten der einzelnen Durchflussmessgeräte auftreten.

Alternativ kann das Kommunikationssystem auch derart ausgebildet sein, dass zumindest die Durchflussmessgeräte jeweils gesondert mit der Steuereinheit verbunden sind, sodass keine Kollisionen mit Nachrichten anderer Durchflussmessgeräte auftreten können.

Gemäß einer zweiten Lehre der vorliegenden Erfindung wird die eingangs dargelegte Aufgabe durch eine eingangs beschriebene Messanordnung zum Abfüllen eines Zielvolumens dadurch gelöst, dass die Steuereinheit und die Recheneinheit zur Durchführung eines der zuvor beschriebenen Verfahren ausgebildet sind.

Sämtliche Ausführungen zu den Ausgestaltungen des Verfahrens betreffen ebenso die erfindungsgemäße Messanordnung und umgekehrt.

Gemäß einer ersten vorteilhaften Ausgestaltung der Messanordnung ist der wenigstens eine Aktor als Ventil ausgebildet und/oder das Kommunikationssystem ist als Feldbus oder als drahtlose Verbindung ausgebildet.

Gemäß einer besonders bevorzugten Ausgestaltung ist eine Mehrzahl an Füllstellen mit jeweils einem Durchflussmessgerät und einem Aktor vorhanden, wobei die Steuereinheit mit der Mehrzahl an Durchflussmessgeräten und der Mehrzahl an Aktoren der Mehrzahl an Füllstellen über das Kommunikationssystem verbunden ist. Gemäß dieser Ausgestaltung regelt die Steuereinheit eine Vielzahl von Füllstellen, wobei jede einzelne Füllstelle gemäß dem zuvor beschriebenen Verfahren individuell geregelt werden kann. Damit ist gewährleistet, dass die Abfüllung des Mediums an sämtlichen Füllstellen besonders genau ist.

Gemäß einer Ausgestaltung sind die Durchflussmessgeräte über ein gemeinsames Kommunikationssystem mit der Steuereinheit verbunden. Gemäß dieser Ausgestaltung werden Zusatznachrichten vorzugsweise mit erhöhter Priorität übertragen, um die Verbesserung der Genauigkeit des Abfüllprozesses an den einzelnen Füllstellen zu gewährleisten.

Gemäß einer alternativen Ausgestaltung können die einzelnen Durchflussmessgeräte separat mit der Steuereinheit kommunizieren. Gemäß dieser Ausgestaltung können Kollisionen mit Zusatznachrichten vermieden werden.

Besonders bevorzugt führen die einzelnen Durchflussmessgeräte an jeder Füllstelle unabhängig voneinander ein oben beschriebenes Verfahren durch. Auf diese Weise kann an jeder Füllstelle eine besonders genaue Abfüllung des Zielvolumens gewährleistet werden.

Gemäß einer dritten Lehre der vorliegenden Erfindung wird die eingangs dargelegte Aufgabe durch die Verwendung eines Durchflussmessgeräts in einer der zuvor beschriebenen Messanordnungen gelöst. Im Detail weist das Durchflussmessgerät dazu eine Recheneinheit auf, die zur Durchführung eines der oben beschriebenen Verfahren sowie zur erfindungsgemäßen Kommunikation mit einer Steuereinheit ausgebildet ist. In Bezug auf die weiteren vorteilhaften Ausgestaltungen des Durchflussmessgeräts wird auf die obigen Ausführungen verwiesen.

Es gibt nun eine Vielzahl von Möglichkeiten, das erfindungsgemäße Verfahren, die erfindungsgemäße Messanordnung und das erfindungsgemäße Durchflussmessgerät auszugestalten und weiterzubilden. Hierzu wird verwiesen auf die den unabhängigen Patentansprüchen nachgeordneten abhängigen Patentansprüche sowie auf die Beschreibung von bevorzugten Ausführungsbeispielen in Verbindung mit der Zeichnung. In der Zeichnung
- Fig. 1: eine schematische Darstellung des zeitlichen Verlaufs des erfindungsgemäßen Abfüllvorgangs,
- Fig. 2: ein erstes Ausführungsbeispiel des erfindungsgemäßen Verfahrens,
- Fig. 3: ein erstes Ausführungsbeispiel der erfindungsgemäßen Messanordnung mit erfindungsgemäßen Durchflussmessgeräten und
- Fig. 4: ein zweites Ausführungsbeispiel eines erfindungsgemäßen Verfahrens.

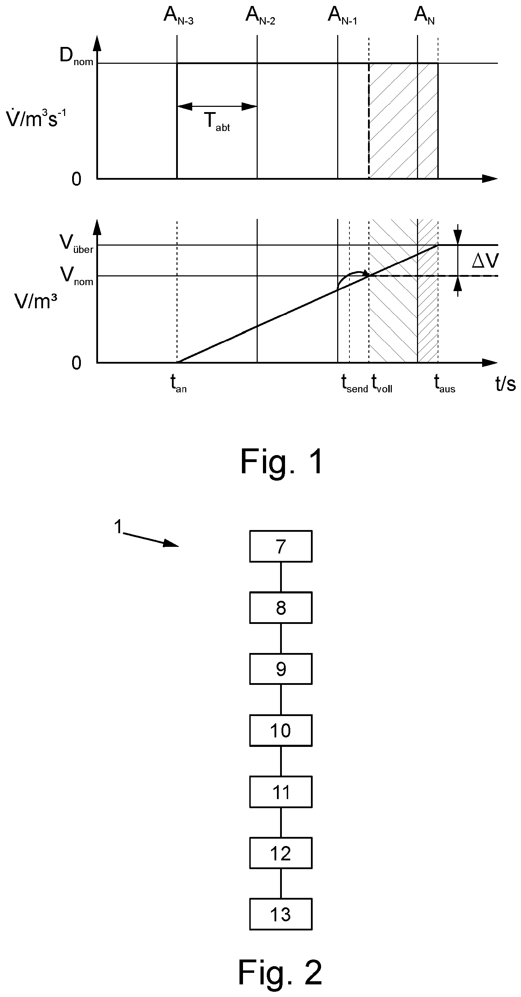

Fig. 1 zeigt eine schematische Darstellung des zeitlichen Verlaufs eines erfindungsgemäßen Abfüllvorgangs. Die obere Abbildung zeigt den zeitlichen Verlauf des Durchflusses Dₙₒₘ, der zu den Zeitpunkten A_{N-3} bis A_{N} erfasst wird. Zu sehen ist, dass der Zeitpunkt, an dem das Zielvolumen erreicht ist, zwischen den Zeitpunkten A_{N-1} und A_{N} liegt. Wird also erst wieder zum Zeitpunkt A_{N} der Durchfluss und insofern das aktuelle Füllvolumen bestimmt, so ist der zu befüllende Behälter bereits überfüllt. Darüber hinaus ist zu berücksichtigen, dass der Vorgang der Beendigung des Abfüllvorgangs ebenfalls eine Totzeit und/oder eine Reaktionszeit des Ventils beinhaltet, was eine weitere Überfüllung zur Folge hat.

Die untere Abbildung zeigt den Erfindungsgedanken dahingehend, dass zum Zeitpunkt A_{N-1} durch die Recheneinheit des Durchflussmessgeräts der Zeitpunkt tᵥₒₗₗ, an dem das Zielvolumen erreicht ist, vorhergesagt wird. Unter Berücksichtigung der zuvor genannten Totzeit und/oder Reaktionszeit des Ventils, wird die Zusatznachricht mit dem Inhalt, dass das Zielvolumen erreicht ist, bereits vorher zum Zeitpunkt t_{send} gesendet, sodass das Ventil möglichst zeitnah zum tatsächlichen Zeitpunkt des Erreichens des Zielvolumens betätigt wird.

Im Ergebnis kann die Genauigkeit des Abfüllprozesses dadurch erheblich verbessert werden, ohne dass die Abtastrate des Durchflussmessgeräts erhöht werden muss.

Fig. 2 zeigt ein erstes Ausführungsbeispiel des erfindungsgemäßen Verfahrens 1 zur Abfüllung eines Zielvolumes in einen Behälter 3, mit einer Messanordnung 14, wobei die Messanordnung 14 wenigstens ein Durchflussmessgerät 2 zur Messung des Durchflusses eines in den Behälter 3 fließenden Mediums, wenigstens einen Aktor 5 und wenigstens eine Steuereinheit 6 aufweist,
wobei das Durchflussmessgerät 2 eine Recheneinheit 4 aufweist,
wobei durch Betätigung des Aktors 5 der Abfüllvorgang begonnen und beendet werden kann,
wobei die Steuereinheit 6 mit dem Aktor 5 und dem Durchflussmessgerät 2 über ein Kommunikationssystem verbunden ist, und wobei die Steuereinheit 6 derart eingerichtet ist, dass sie im Betrieb einen Steuerbefehl an den Aktor 5 zur Beendigung des Abfüllvorgangs sendet, wenn ein festgelegter Grenzwert, der mit dem Zielvolumen korreliert, erreicht ist. Im Detail ist der Aktor 5 als Ventil ausgebildet.

Das dargestellte Verfahren 1 weist die folgenden Schritte auf:
- Starten des Füllvorgangs 7 durch Öffnen des Ventils,
- Berechnung des aktuellen Füllvolumens 8 durch Integration der gemessenen Durchflussmesswerte durch die Recheneinheit des wenigstens einen Durchflussmessgeräts,
- Regelmäßiges Senden einer Füllnachricht 9 in einem Senderhythmus mit dem aktuellen Füllvolumen von dem Durchflussmessgerät 2 an die Steuereinheit 6,
- Prädiktion der verbleibenden Zeit bis der Grenzwert erreicht ist 10 durch die Recheneinheit 4 des Durchflussmessgeräts 2,
- Prüfung durch die Recheneinheit 4 des Durchflussmessgeräts 2, ob der Grenzwert zeitlich vor der nächsten Füllnachricht des wenigstens einen Durchflussmessgeräts 2 erreicht ist 11,
- sofern der Grenzwert zeitlich vor der nächsten Füllnachricht des wenigstens einen Durchflussmessgeräts 2 erreicht ist, Senden einer Zusatznachricht 12 mit dem Grenzwert zu einem prädizierten Zeitpunkt zeitlich vor der nächsten Füllnachricht an die Steuereinheit 6, wobei die Zusatznachricht zeitlich vor dem tatsächlichen Erreichen des Grenzwertes gesendet wird,
- Beenden des Füllvorgangs 13 auf Befehl der Steuereinheit durch Schließen des Ventils.

Wir der Grenzwert zeitlich nicht vor der nächsten Füllnachricht erreicht, so wird planmäßig mit dem Senderhythmus, beispielsweise mit der Abtastrate, der nächste Durchflussmesswert bzw. der nächste Wert des aktuellen Füllvolumens bestimmt und der Steuereinheit 6 in einer Füllnachricht mitgeteilt.

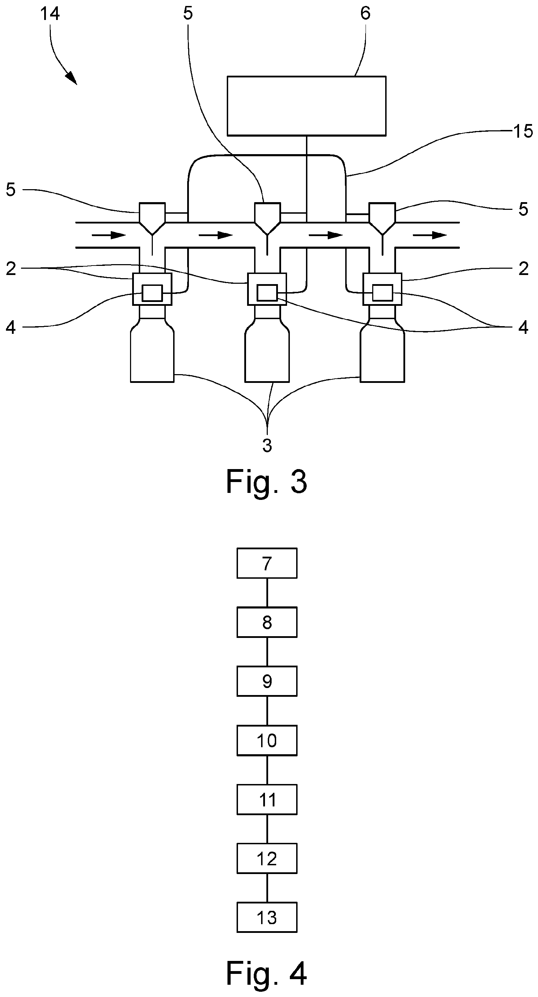

Fig. 3 zeigt ein erstes Ausführungsbeispiel der erfindungsgemäßen Messanordnung 14 mit erfindungsgemäßen Durchflussmessgeräten 2 und mit Aktoren 5, die als Ventile ausgebildet sind, wobei ein Abfüllvorgang mit den Ventilen gestartet und auch beendet werden kann.

Die Steuereinheit 6 ist über ein Kommunikationssystem 15, das im dargestellten Ausführungsbeispiel als Feldbus ausgebildet ist, mit den Ventilen und den Durchflussmessgeräten 2 verbunden. Der Feldbus kann auch eine andere Geometrie als die dargestellte aufweisen. Die Steuereinheit 6 sendet im Betrieb Befehle zum Schließen der einzelnen Ventile, wenn die zugehörigen Behälter ihr Zielvolumen aufweisen.

Die dargestellten Durchflussmessgeräte 2 sind nun derart eingerichtet, dass sie erfindungsgemäß den Zeitpunkt des Erreichens des Zielvolumens bzw. des Grenzwertes zum Beenden des Abfüllvorgangs vorhersagen und unter Berücksichtigung von Reaktionszeiten und/oder Totzeiten anderer Komponenten der Messanordnung 14 die Zusatznachricht, dass das Zielvolumen bzw. der Grenzwert erreicht ist, an die Steuereinheit 6 übermitteln.

Die dargestellte Messanordnung 14 weist damit eine besonders hohe Messgenauigkeit der abgefüllten Zielvolumen auf.

Fig. 4 zeigt ein zweites Ausführungsbeispiel eines erfindungsgemäßen Verfahrens 1, wobei die Steuereinheit 6, wie in Fig. 3 dargestellt, mit einer Mehrzahl an Durchflussmessgeräten 2 und einer Mehrzahl an Ventilen verbunden ist.

Jedes Durchflussmessgerät 2 führt für sich die bereits beschriebenen Schritte 7 bis 11 durch. Sofern ein Durchflussmessgerät 2 daraufhin eine Zusatznachricht 12 sendet, weist diese Zusatznachricht eine erhöhte Priorität auf.

Anschließend wird an der Füllstelle, an der die Zusatznachricht versendet wurde, der Füllvorgang beendet 13. Das dargestellte Verfahren 1 gewährleistet insofern, dass auch in einer Messanordnung mit verschiedenen Füllstellen, an jeder Füllstelle das Zielvolumen besonders genau dosiert werden kann.

### Bezugszeichen

- 1: Verfahren zur Abfüllung eines Mediums
- 2: Durchflussmessgerät
- 3: Behälter
- 4: Recheneinheit
- 5: Aktor
- 6: Steuereinheit
- 7: Starten des Abfüllvorgangs
- 8: Berechnung des aktuellen Füllvolumens
- 9: Senden einer Füllnachricht
- 10: Prädiktion der verbleibenden Zeit bis das Zielvolumen erreicht ist
- 11: Prüfung, ob der Grenzwert zeitlich vor der nächsten Füllnachricht des wenigstens einen Durchflussmessgeräts erreicht ist,
- 12: Senden einer Zusatznachricht
- 13: Beenden des Abfüllvorgangs
- 14: Messanordnung
- 15: Kommunikationssystem

## Patentansprüche

1. Verfahren (1) zur Abfüllung eines Zielvolumens in einen Behälter (3), mittels einer Messanordnung (14), wobei die Messanordnung (14) wenigstens ein Durchflussmessgerät (2) zur Messung des Durchflusses eines in den Behälter (3) fließenden Mediums, wenigstens einen Aktor (5) und wenigstens eine Steuereinheit (6) aufweist,
wobei das Durchflussmessgerät (2) eine Recheneinheit (4) aufweist,
wobei durch Betätigung des Aktors (5) der Abfüllvorgang begonnen und beendet werden kann,
wobei die Steuereinheit (6) mit dem Aktor (5) und/oder dem Durchflussmessgerät (2) über ein Kommunikationssystem (15) verbunden ist, und wobei die Steuereinheit (6) derart eingerichtet ist, dass sie im Betrieb einen Steuerbefehl an den Aktor (5) zur Beendigung des Abfüllvorgangs sendet, wenn ein festgelegter Grenzwert des Füllvolumens, der mit dem Zielvolumen korreliert, erreicht ist,
wobei das Verfahren (1) die folgenden Schritte umfasst:
- Starten des Abfüllvorgangs (7),
- Berechnung des aktuellen Füllvolumens (8) durch Integration der gemessenen Durchflussmesswerte durch die Recheneinheit (4) des Durchflussmessgeräts (2),
- Senden einer Füllnachricht (9) in definierten Zeitabständen mit dem aktuellen Füllvolumen von dem Durchflussmessgerät (2) an die Steuereinheit (6),
- Prädiktion der verbleibenden Zeit bis der Grenzwert des Füllvolumens erreicht ist (10) durch die Recheneinheit (4) des Durchflussmessgeräts (2),
- Prüfung durch die Recheneinheit (4) des Durchflussmessgeräts (2), ob der Grenzwert des Füllvolumens zeitlich vor dem Senden der nächsten Füllnachricht des Durchflussmessgeräts (2) erreicht ist (11),
- sofern der Grenzwert des Füllvolumens zeitlich vor dem Senden der nächsten Füllnachricht des Durchflussmessgeräts (2) erreicht ist, Senden einer Zusatznachricht (12) mit dem Grenzwert des Füllvolumens zu einem prädizierten Zeitpunkt zeitlich vor der nächsten Füllnachricht an die Steuereinheit (6),
- Beenden des Abfüllvorgangs (13) durch einen Steuerbefehl der Steuereinheit (6),
wobei die Zusatznachricht zeitlich vor dem Erreichen des Grenzwertes des Füllvolumens gesendet wird, wobei die zeitliche Differenz die Übertragungsdauer der Datenübertragung und/oder der Reaktionszeit der Steuereinheit (6) und/oder der Reaktionszeit des Aktors (5) berücksichtigt.

2. Verfahren (1) nach Anspruch 1, **dadurch gekennzeichnet, dass** die Zusatznachricht unter Berücksichtigung der Übertragungsdauer der Datenübertragung und/oder der Reaktionszeit der Steuereinheit (6) und/oder der Reaktionszeit des Aktors (5) gesendet wird.

3. Verfahren (1) nach einem der Ansprüche 1 bis 2, **dadurch gekennzeichnet, dass** die Zusatznachricht spätestens zum Zeitpunkt, zu dem das Zielvolumen erreicht ist, vorzugsweise zeitlich vor dem Erreichen des Zielvolumens gesendet wird.

4. Verfahren (1) nach einem der Ansprüche 1 bis 3, **dadurch gekennzeichnet, dass** die Zusatznachricht mit erhöhter Priorität gesendet wird.

5. Verfahren (1) nach einem der Ansprüche 1 bis 4, **dadurch gekennzeichnet, dass** wenigstens eine Füllnachricht des Durchflussmessgeräts (2) ausgelassen wird.

6. Verfahren (1) nach einem der Ansprüche 1 bis 5, **dadurch gekennzeichnet, dass** eine Mehrzahl an Durchflussmessgeräte (2) und eine Mehrzahl an Aktoren (5) vorhanden ist, wobei die Steuereinheit (6) mit der Mehrzahl an Durchflussmessgeräten (2) und an Aktoren (5) durch das Kommunikationssystem verbunden ist, und dass, sofern ein Durchflussmessgerät (2) eine Zusatznachricht außerhalb seines Senderhythmus sendet, diese Zusatznachricht priorisiert gesendet wird.

7. Messanordnung (14) zum Abfüllen eines Zielvolumens in einen Behälter (3), mit wenigstens einem Durchflussmessgerät (2) zur Messung des Durchflusses eines in den wenigstens einen Behälter (3) fließenden Mediums, mit wenigstens einem Aktor (5), mit wenigstens einer Steuereinheit (6),
wobei das Durchflussmessgerät (2) eine Recheneinheit (4) aufweist,
wobei durch Betätigung des Aktors (5) der Abfüllvorgang begonnen und beendet werden kann,
wobei die Steuereinheit (6) mit dem Aktor (5) und dem Durchflussmessgerät (2) über ein Kommunikationssystem (15) verbunden ist, und wobei die Steuereinheit (6) derart eingerichtet ist, dass sie im Betrieb einen Steuerbefehl an den Aktor (5) zur Beendigung des Abfüllvorgangs sendet, wenn ein festgelegter Grenzwert des Füllvolumens, der mit dem Zielvolumen korreliert, erreicht ist,
**dadurch gekennzeichnet,**
**dass** die Steuereinheit (6) und die Recheneinheit (4) des Durchflussmessgeräts (2) zur Durchführung eines Verfahrens (1) nach einem der Ansprüche 1 bis 6 ausgebildet und eingerichtet sind.

8. Messanordnung (14) nach Anspruch 7, **dadurch gekennzeichnet, dass** der wenigstens eine Aktor (5) als Ventil ausgebildet ist und/oder dass das Kommunikationssystem (15) als Feldbus oder als drahtlose Verbindung ausgebildet ist.

9. Messanordnung (14) nach Anspruch 7 oder 8, **dadurch gekennzeichnet, dass** eine Mehrzahl an Füllstellen mit jeweils einem Durchflussmessgerät (2) und einem Aktor (5) vorhanden ist, wobei die Steuereinheit (6) mit der Mehrzahl an Durchflussmessgeräten (2) und der Mehrzahl an Aktoren (5) der Mehrzahl an Füllstellen über das Kommunikationssystem verbunden ist.

10. Messanordnung (14) nach Anspruch 9, **dadurch gekennzeichnet, dass** die einzelnen Durchflussmessgeräte (2) an jeder Füllstelle unabhängig voneinander ein Verfahren nach einem der Ansprüche 1 bis 6 durchführen.

11. Verwendung eines Durchflussmessgeräts (2) in einer Messanordnung (14) nach einem der Ansprüche 7 bis 10.

## Claims

1. Method (1) for filling a container (3) to a target volume, using a measuring arrangement (14), wherein the measuring arrangement (14) comprises at least one flowmeter (2) for measuring the flow of a medium flowing into the container (3), at least one actuator (5), and at least one control unit (6),
wherein the flowmeter (2) has a computing unit (4),
wherein the filling process can be started and stopped by actuating the actuator (5),
wherein the control unit (6) is connected to the actuator (5) and/or the flowmeter (2) via a communication system (15), and wherein the control unit (6) is designed such that, during operation, it sends a control command to the actuator (5) to terminate the filling process when a specified threshold value for the fill volume, which correlates with the target volume, is reached,
wherein the method (1) comprises the following steps:
- starting the filling process (7),
- calculating the current fill volume (8) by integrating the measured flow measurement values using the computing unit (4) of the flowmeter (2),
- transmitting a fill message (9), containing the current fill volume, from the flowmeter (2) to the control unit (6) at defined intervals,
- predicting the remaining time until the fill volume threshold is reached (10) by the computing unit (4) of the flowmeter (2),
- checking by the computing unit (4) of the flowmeter (2) whether the fill volume threshold has been reached (11) before the flowmeter (2) transmits its next fill message,
- if the fill volume threshold is reached before the flowmeter (2) sends its next fill message, sending an additional message (12) containing the fill volume threshold to the control unit (6) at a predicted time prior to the next fill message,
- ending the filling process (13) via a control command from the control unit (6),
wherein the additional message is sent before the fill volume threshold is reached, and the time difference takes into account the duration of the data transmission and/or the response time of the control unit (6) and/or the response time of the actuator (5).

2. Method (1) according to claim 1, **characterized in that** the additional message is transmitted taking into account the duration of the data transmission and/or the response time of the control unit (6) and/or the response time of the actuator (5).

3. Method (1) according to any one of claims 1 to 2, **characterized in that** the additional message is sent no later than the time at which the target volume is reached, preferably before the target volume is reached.

4. Method (1) according to any one of claims 1 to 3, **characterized in that** the additional message is sent with a higher priority.

5. Method (1) according to any one of claims 1 to 4, **characterized in that** at least one fill message from the flowmeter (2) is omitted.

6. Method (1) according to any one of claims 1 to 5, **characterized in that** there are a plurality of flowmeters (2) and a plurality of actuators (5), wherein the control unit (6) is connected to the plurality of flowmeters (2) and actuators (5) via the communication system, and that, if a flowmeter (2) transmits an additional message outside its transmitting frequency, this additional message is transmitted with priority.

7. Measuring arrangement (14) for filling a target volume into a container (3), comprising at least one flowmeter (2) for measuring the flow of a medium flowing into the at least one container (3), at least one actuator (5), and at least one control unit (6),
wherein the flowmeter (2) has a computing unit (4),
wherein the filling process can be started and stopped by actuating the actuator (5),
wherein the control unit (6) is connected to the actuator (5) and the flowmeter (2) via a communication system (15), and wherein the control unit (6) is designed such that, during operation, it sends a control command to the actuator (5) to terminate the filling process when a specified threshold value for the fill volume, which correlates with the target volume, is reached,
**characterized in**
**that** the control unit (6) and the computing unit (4) of the flowmeter (2) are designed and arranged to carry out a method (1) according to any one of claims 1 to 6.

8. Measuring arrangement (14) according to claim 7, **characterized in that** the at least one actuator (5) is designed as a valve and/or that the communication system (15) is designed as a fieldbus or as a wireless connection.

9. Measuring arrangement (14) according to claim 7 or 8, **characterized in that** there are a plurality of filling points, each having a flowmeter (2) and an actuator (5), wherein the control unit (6) is connected to the plurality of flowmeters (2) and the plurality of actuators (5) of the plurality of filling points via the communication system.

10. Measuring arrangement (14) according to claim 9, **characterized in that** the individual flowmeters (2) at each filling point independently carry out a method according to any one of claims 1 to 6.

11. Use of a flowmeter (2) in a measuring arrangement (14) according to any one of claims 7 to 10.

## Revendications

1. Procédé (1) destiné au remplissage d'un volume cible dans un récipient (3) au moyen d'un dispositif de mesure (14), le dispositif de mesure (14) comportant au moins un dispositif de mesure de débit (2) pour mesurer le débit d'un milieu s'écoulant dans le récipient (3), au moins un actionneur (5) et au moins une unité de commande (6),
le débitmètre (2) comportant une unité de calcul (4), le processus de remplissage pouvant être démarré et interrompu par actionnement de l'actionneur (5), l'unité de commande (6) étant reliée à l'actionneur (5) et/ou au débitmètre (2) par l'intermédiaire d'un système de communication (15), et l'unité de commande (6) étant conçue de telle sorte qu'en fonctionnement, elle envoie une instruction de commande à l'actionneur (5) pour interrompre le processus de remplissage, lorsqu'une valeur limite définie du volume de remplissage en corrélation avec le volume cible est atteinte,
le procédé (1) comprenant les étapes suivantes :
- démarrer le processus de remplissage (7),
- calculer le volume de remplissage actuel (8) par intégration, au moyen de l'unité de calcul (4) du débitmètre (2), des valeurs de mesure de débit mesurées,
- envoyer un message de remplissage (9) à des intervalles de temps définis, contenant le volume de remplissage actuel du débitmètre (2) à l'unité de commande (6),
- prédire le temps restant jusqu'à ce que la valeur limite du volume de remplissage soit atteinte (10) au moyen de l'unité de calcul (4) du débitmètre (2),
- vérifier, au moyen de l'unité de calcul (4) du débitmètre (2), si la valeur limite du volume de remplissage a été atteinte (11) avant l'envoi du prochain message de remplissage du débitmètre (2),
- si la valeur limite du volume de remplissage a été atteinte avant le prochain message de remplissage du débitmètre (2), envoyer un message supplémentaire (12) contenant la valeur limite du volume de remplissage à l'unité de commande (6) à un instant prédit avant le prochain message de remplissage,
- interrompre le remplissage (13) au moyen d'une instruction de commande de l'unité de commande (6),
le message supplémentaire étant envoyé avant que la valeur limite du volume de remplissage soit atteinte, la différence de temps tenant compte de la durée de transmission de la transmission de données et/ou du temps de réaction de l'unité de commande (6) et/ou du temps de réaction de l'actionneur (5).

2. Procédé (1) selon la revendication 1, **caractérisé en ce que** le message supplémentaire est envoyé en tenant compte de la durée de transmission de la transmission de données et/ou du temps de réaction de l'unité de commande (6) et/ou du temps de réaction de l'actionneur (5).

3. Procédé (1) selon l'une des revendications 1 à 2, **caractérisé en ce que** le message supplémentaire est envoyé au plus tard à l'instant où le volume cible est atteint, de préférence avant que le volume cible soit atteint.

4. Procédé (1) selon l'une des revendications 1 à 3, **caractérisé en ce que** le message supplémentaire est envoyé avec une priorité augmentée.

5. Procédé (1) selon l'une des revendications 1 à 4, **caractérisé en ce qu'**au moins un message de remplissage du débitmètre (2) est omis.

6. Procédé (1) selon l'une des revendications 1 à 5, **caractérisé en ce qu'**il est prévu plusieurs dispositifs de mesure de débit (2) et plusieurs actionneurs (5), l'unité de commande (6) étant reliée par le système de communication à la pluralité de dispositifs de mesure de débit (2) et aux actionneurs (5) et **en ce que**, si un débitmètre (2) envoie un message supplémentaire en dehors de son rythme d'émission, ce message supplémentaire est envoyé de manière prioritaire.

7. Dispositif de mesure (14) destiné au remplissage d'un volume cible dans un récipient (3), comprenant au moins un dispositif de mesure de débit (2) pour mesurer le débit d'un milieu s'écoulant dans le récipient (3), au moins un actionneur (5), au moins une unité de commande (6),
le débitmètre (2) comportant une unité de calcul (4),
le processus de remplissage pouvant être démarré et interrompu par actionnement de l'actionneur (5),
l'unité de commande (6) étant reliée à l'actionneur (5) et au débitmètre (2) par l'intermédiaire d'un système de communication (15), l'unité de commande (6) étant conçue de telle sorte qu'en fonctionnement, elle envoie une instruction de commande à l'actionneur (5) pour interrompre le processus de remplissage, lorsqu'une valeur limite définie du volume de remplissage en corrélation avec le volume cible est atteinte,
caractérisé en ce
l'unité de commande (6) et l'unité de calcul (4) du débitmètre (2) sont configurées et conçues pour mettre en œuvre un procédé (1) selon l'une des revendications 1 à 6.

8. Dispositif de mesure (14) selon la revendication 7, **caractérisé en ce que** ledit au moins un actionneur (5) est réalisé sous forme de soupape et/ou **en ce que** le système de communication (15) est réalisé sous forme de bus de terrain ou de liaison sans fil.

9. Dispositif de mesure (14) selon la revendication 7 ou 8, **caractérisé en ce qu'**il est prévu plusieurs points de remplissage comportant respectivement un dispositif de mesure de débit (2) et un actionneur (5), l'unité de commande (6) étant reliée à la pluralité de dispositifs de mesure de débit (2) et à la pluralité d'actionneurs (5) de la pluralité de points de remplissage par l'intermédiaire du système de communication.

10. Dispositif de mesure (14) selon la revendication 9, **caractérisé en ce que** les différents débitmètres (2) mettent en œuvre un procédé selon l'une des revendications 1 à 6 indépendamment les uns des autres en chaque point de remplissage.

11. Utilisation d'un débitmètre (2) dans un dispositif de mesure (14) selon l'une des revendications 7 à 10.
